(19) Europäisches Patentamt
European Patent Office
Office européen des brevets

(11) **EP 3 266 627 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
***B60C 19/00*** *(2006.01)*

(21) Anmeldenummer: **17170583.3**

(22) Anmeldetag: **11.05.2017**

(54) **FAHRZEUGLUFTREIFEN**

PNEUMATIC TYRES FOR A VEHICLE

PNEUMATIQUES DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2016   DE 102016212472**

(43) Veröffentlichungstag der Anmeldung:
**10.01.2018   Patentblatt 2018/02**

(73) Patentinhaber: **Continental Reifen Deutschland GmbH**
**30165 Hannover (DE)**

(72) Erfinder:
• **Zebian, Makram**
**30175 Hannover (DE)**
• **Schürmann, Oliver**
**30855 Langenhagen (DE)**
• **Özdogan, Gültekin**
**30419 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 1 741 570          EP-A1- 2 006 125**
**DE-A1-102014 206 009     JP-A- 2014 169 060**
**JP-U- H0 241 803**

## Beschreibung

Die vorliegende Erfindung bezieht sich auf einen Luftreifen mit mindestens einem Dämpfungselement, wobei das mindestens eine Dämpfungselement zur Verminderung von Geräuschen geeignet ist.

Die Erfindung geht aus von einem Luftreifen mit mindestens einem Dämpfungselement, wobei das mindestens eine Dämpfungselement in einem Inneren des Luftreifens an einer einem Laufstreifen des Luftreifens gegenüber liegenden Reifeninnenfläche angebracht ist. Dabei ist das mindestens eine Dämpfungselement aus einem porösen Material ausgebildet und es ist zur Verminderung von Geräuschen geeignet. Dabei ist ferner eine Maximalhöhe des mindestens einen Dämpfungselementes größer als eine Maximallänge des mindestens einen Dämpfungselementes.

Die Maximalhöhe des mindestens einen Dämpfungselements entspricht einer sich rechtwinklig zu einer Rotationsachse des Luftreifens erstreckenden Ausdehnung des mindestens einen Dämpfungselementes. Die Maximallänge entspricht einer sich entlang einer Umlaufrichtung des Luftreifens erstreckenden maximalen Ausdehnung des mindestens einen Dämpfungselementes.

Aus dem Stand der Technik sind beispielsweise Luftreifen mit Dämpfungselementen bekannt, wobei die Dämpfungselemente zur Verminderung von Geräuschen, die im Inneren eines Luftreifens entstehen können, geeignet sind. Dabei ist sowohl der Einsatz eines einzelnen Dämpfungselementes, als auch der Einsatz einer Mehrzahl von Dämpfungselementen zur Verminderung von Geräuschen aus dem Stand der Technik bekannt. Ein Reifen mit mehreren Dämpfungselementen wird zum Beispiel in der JP 2014 169060 A offenbart.

Beispielsweise wird in der DE 11 2006 000 354 T5 ein geräuscharmer Luftreifen offenbart. Der geräuscharme Luftreifen umfasst dabei eine Vielzahl geräuschabsorbierender Elemente eines porösen Materials die an der inneren Umfangsoberfläche des Reifens angebracht sind. Dabei soll die Gesamtlänge der geräuschabsorbierenden Elemente, die durch Integrieren der Längen der geräuschabsorbierenden Elemente in der Reifenumfangrichtung erhalten wird, nicht weniger als 75% der maximalen inneren Umfangslänge des Reifens betragen, wobei der Abstand zwischen je zwei benachbarten geräuschabsorbierenden Elementen nicht kleiner als die maximale Dicke der Endabschnitte der geräuschabsorbierenden Elemente in der Reifenumfangsrichtung ist.

Weiterhin wird in der EP 2 566 712 B1 ein elastischer Fahrzeugreifen offenbart, wobei der elastische Fahrzeugreifen einen Hohlraum aufweist, eingefasst durch einen die Lauffläche tragenden Laufstreifen und einer an jeder Seite des Laufstreifens angeformten Seitenwand. Dabei ist zumindest ein in dem Reifenhohlraum angeordneter schalldämpfender Einsatz vorhanden.

Darüber hinaus wird in der EP 1 510 3 66 A1 ein Luftreifen offenbart, wobei im Inneren des Luftreifens an einer Reifeninnenfläche eine Mehrzahl geräuschunterdrückender Elemente angeordnet ist.

Für die aus dem Stand der bekannten Vorrichtungen zur Dämpfung von Geräuschen ist stets eine bestimmte Menge an Dämpfungsmaterial für die Dämpfungselemente notwendig. Der Einsatz bestimmter Mengen des Dämpfungsmaterials ist mit hohen Kosten verbunden.

Der Erfindung liegt daher die Aufgabe zugrunde, bei zugleich größtmöglicher Geräuschminderung lediglich eine geringere Menge porösen Materials für die Dämpfungselemente zu verwenden.

Gelöst wird die gestellte Aufgabe erfindungsgemäß dadurch, dass die Maximalhöhe zu der Maximallänge in einem ersten Längenverhältnis von größer 1:1 bis 5:1 und vorzugsweise von 4:3 oder 5:3 steht, wobei die Maximalbreite den Wert einer maximalen Breite der Reifeninnenfläche beträgt.

Dadurch, dass die Maximalhöhe zu der Maximallänge in einem ersten Längenverhältnis von größer 1:1 bis 5:1 und vorzugsweise von 4:3 oder 5:3 steht, wird einerseits sichergestellt, dass das mindestens eine Dämpfungselement eine ausreichende Höhe aufweist. Hintergrund ist, dass insbesondere die Höhe des mindestens einen Dämpfungselementes für die effektive Verminderung von Geräuschen ursächlich und wesentlich ist.

Andererseits wird eine ausreichend große Maximallänge des mindestens einen Dämpfungselementes sichergestellt, so dass eine zuverlässige Verbindung zwischen dem mindestens einen Dämpfungselement und der Reifeninnenfläche des Laufstreifens ermöglicht wird. Hintergrund ist, dass die Ausdehnung der Fläche des mindestens einen Dämpfungselements, zwischen der eine Verbindung mit der Reifeninnenfläche geschaffen werden soll und die als Verbindungsfläche bezeichnet werden kann, proportional zur Größe der Maximallänge des mindestens einen Dämpfungselementes ist. Je größer die Verbindungsfläche ist, desto stabiler ist die Verbindung zwischen dem mindestens einen Dämpfungselement und der Reifeninnenfläche. In Abhängigkeit der Maximallänge wird eine solche Verbindungsfläche ermöglicht, die mindestens notwendig ist, um eine stabile Verbindung zwischen Dämpfungselement und Reifeninnenfläche zu gewährleisten. Eine unnötig große Verbindungsfläche, die mit einer größeren Menge porösen Materials einhergeht, wird vermieden.

Insgesamt wird somit sowohl eine zuverlässige und effektive Geräuschreduktion sichergestellt, als auch eine ausreichend stabile Verbindung zwischen dem mindestens einen Dämpfungselement und der Reifeninnenfläche gewährleistet. Insgesamt wird dadurch ein effizienter und kostengünstiger Einsatz der Dämpfungselemente sichergestellt und ermöglicht.

Weitere vorteilhafte Ausführungsformen der vorliegenden Erfindung sind Gegenstand der Unteransprüche.

Gemäß einer nächsten vorzugsweisen Ausgestaltungsform der Erfindung beträgt die Maximalhöhe 20mm bis 150mm und beispielsweise 40mm. Vorzugsweise entspricht die Maximalhöhe einem Abstand der Reifeninnenfläche zu einer Felge.

Durch den Umstand, dass die Maximalhöhe 20mm bis 150mm, beispielsweise 40mm, und vorzugsweise den Wert des Abstands der Reifeninnenfläche zu einer Felge beträgt, wird eine effektive Minderung von Geräuschen erreicht. Hintergrund ist eine effiziente Versperrung des durch die Reifeninnenfläche und einer Felge gebildeten Reifeninnenraumes.

Gemäß einer nächsten vorzugsweisen Ausgestaltungsform der Erfindung beträgt die Maximallänge 10mm bis 50mm, vorzugsweise 15mm bis 30mm und insbesondere 20mm bis 25mm. Weiter entspricht die Maximallänge vorzugsweise einem Abstand der Reifeninnenfläche zu einer Felge oder einem Wert, der kleiner als der Wert des Abstands der Reifeninnenfläche zu einer Felge ist. Beispielhaft kann eine Maximalhöhe 150 mm und eine Maximallänge 30 mm betragen, das entspräche einem ersten Längenverhältnis von 5:1. Ferner könnte beispielhaft eine Maximalhöhe 40 mm und eine Maximallänge 30 mm betragen, das entspräche einem ersten Längenverhältnis von 4:3.

Gemäß einer weiteren vorteilhaften Ausführungsform der Erfindung ist die Maximalhöhe größer oder gleich einer Maximalbreite des mindestens einen Dämpfungselementes. Dabei entspricht die Maximalbreite einer sich rechtwinklig zur Umlaufrichtung entlang der Reifeninnenfläche sich erstreckenden Ausdehnung des mindestens einen Dämpfungselementes.

Insbesondere steht die Maximalhöhe zu der Maximalbreite in einem zweiten Längenverhältnis von 1:1 bis 5:1 und vorzugsweise von 4:3 oder 5:3.

Erfindungsgemäß beträgt die Maximalbreite den Wert einer maximalen Breite der Reifeninnenfläche. Die maximale Breite entspricht dabei einer Ausdehnung der Reifeninnenfläche, wobei sich diese Ausdehnung entlang der Reifeninnenfläche und rechtwinklig zur Umlaufrichtung des Luftreifens erstreckt.

Gemäß einer weiteren vorteilhaften Ausgestaltungsform der Erfindung verjüngt sich das mindestens eine Dämpfungselement von der Reifeninnenfläche ausgehend in Richtung der Rotationsachse hin. Insbesondere weist das mindestens eine Dämpfungselement die Form einer Pyramide, eines Pyramidenstumpfs, vorzugsweise mit trapezförmigen Seitenflächen, eines Kegels oder eines Kegelstumpfes auf.

Durch den erfindungsgemäßen Umstand, wonach das mindestens eine Dämpfungselement sich von der Reifeninnenfläche ausgehend in Richtung der Rotationsachse hin verjüngt, kann wiederum die Menge des porösen Materials, die für die Herstellung des mindestens einen Dämpfungselementes notwendig ist, verkleinert werden. Dadurch, dass die Verbindungsfläche des mindestens einen Dämpfungselementes, die mit der Reifeninnenfläche verbunden ist, ausreichend groß ist, kann auf poröses Material in dem zu einer Felge naheliegenden Bereich des mindestens einen Dämpfungselementes verzichtet werden. Hintergrund ist, dass die Höhe des Dämpfungselementes bei der Bewirkung der Unterdrückung und Verminderung von Geräuschen wichtiger als die Masse oder das Volumen des Dämpfungselementes in dem zu einer Felge naheliegenden Bereich ist. Der Umstand, wonach das mindestens eine Dämpfungselement sich von der Reifeninnenfläche ausgehend in Richtung der Rotationsachse hin verjüngt, führt ferner dazu, dass die Dämpfungselemente einem Querschnitt des Luftreifens folgen und entlang der gekrümmten Reifeninnenfläche nahe beieinander angeordnet werden können. Der Querschnitt steht dabei rechtwinklig zu der Umlaufrichtung des Luftreifens.

Darüber hinaus wird aufgrund dieser Form des Dämpfungselements eine Montage des Luftreifens auf einer Felge einfach gestaltet. Hintergrund ist, dass die Menge des Materials, aus dem das Dämpfungselement ausgebildet ist, ebenso wie das Volumen des Dämpfungselements in Richtung der Felge hin abnimmt.

Gemäß einer weiteren vorzugsweisen Ausgestaltungsform der Erfindung entspricht eine größte erste Maximalhöhe 80% bis 100% einer Länge und vorzugsweise einer maximalen Länge, einer rechtwinklig zur Rotationsachse zwischen der Reifeninnenfläche und einer Felge verlaufenden Strecke.

Gemäß einer weiteren Möglichkeit weisen das mindestens eine Dämpfungselement und die Felge einen Abstand von mindestens 10mm bis 25mm voneinander auf. Durch den Umstand, dass das mindestens eine Dämpfungselement und die Felge einen Abstand von mindestens 10mm bis 25mm voneinander aufweisen, werden Reibungen der Felge mit dem mindestens einen Dämpfungselement vermieden. Dabei könnten die Reibungen der Felge mit dem mindestens einen Dämpfungselement zu einer mechanischen Beschädigung des mindestens einen Dämpfungselementes führen.

Gemäß einer nächsten vorzugsweisen Ausgestaltungsform der Erfindung ist eine zu einer Felge weisende Oberfläche mindestens eines Dämpfungselements konvex oder konkav geformt. Dabei ist die konvex oder konkav geformte Oberfläche insbesondere halbzylindrisch, vorzugsweise elliptisch-halbzylindrisch, parabolisch-halbzylindrisch oder hyperbolisch-halbzylindrisch oder sinusförmig oder sinusquadratförmig oder wellenförmig oder halbkreisförmig oder halbkreisförmig-dreieckig oder spitz oder korrespondierend zu einer Kontur der Felge geformt.

Gemäß einer nächsten vorteilhaften Ausgestaltungsform der Erfindung beträgt eine Anzahl von Dämpfungselementen 1-100 und insbesondere 2, 3, 4 oder einen doppelten Wert einer Nummer einer Raummode, beispielsweise bei Raummode 1: doppelter Wert = 2, bei Raummode 2: doppelter Wert = 4, bei Raummode 5: doppelter Wert = 10.

Bei einer Raummode handelt es sich um eine Eigenschaft einer stehenden akustischen Welle. Die Raummode entspricht insbesondere einer den Raum ausfüllenden Eigenform der Welle. Die Nummer der Raummode entspricht beispielsweise einer Anzahl der Luftschallwellenlängen entlang des inneren Umfangs des Luftreifens im durch die Reifeninnenfläche gebildeten Innenraum, also einer Anzahl von Luftschallwellenlängen entlang einer Umfangslänge der Reifeninnenfläche.

Durch den Umstand, dass die Anzahl von Dämpfungselementen 2, 3, 4 oder einen doppelten Wert einer Nummer einer Raummode beträgt, kann der Einsatz der Dämpfungselemente genau an die akustischen Gegebenheiten des Luftreifens angepasst werden. Je nach Art oder Betrieb des Luftreifens können unterschiedliche Hauptfrequenzen der Geräusche im Inneren des Luftreifens auftreten. Dadurch, dass die Anzahl der Dämpfungselemente an die akustischen Gegebenheiten des Reifens und an die möglicherweise auftretenden Hauptfrequenzen angepasst ist, wird der unnötige Einsatz überzähliger Dämpfungselemente vermieden. Das Vermeiden des unnötigen Einsatzes überzähliger Dämpfungselemente führt zu einer Einsparung des porösen Materials.

Gemäß einer nächsten vorzugsweisen Ausführungsform der Erfindung beträgt ein erster Maximalabstand zwischen mindestens einem ersten Dämpfungselement zu einem ihm unmittelbar benachbarten mindestens einen zweiten Dämpfungselement in Umlaufrichtung des Luftreifens entlang der Reifeninnenfläche 0 mm bis 1000 mm.

Gemäß einer weiteren vorzugsweisen Ausgestaltungsform der Erfindung ist der erste Maximalabstand von einem zweiten Maximalabstand verschieden. Dabei handelt es sich bei dem zweiten Maximalabstand um einen Abstand in Umlaufrichtung des Luftreifens entlang der Reifeninnenfläche zwischen dem mindestens einen ersten Dämpfungselement zu einem ihm unmittelbar benachbarten mindestens einen dritten Dämpfungselement. Das mindestens eine erste Dämpfungselement ist räumlich entlang der Reifeninnenfläche zwischen dem mindestens einen zweiten Dämpfungselement und dem mindesten einen dritten Dämpfungselement angeordnet.

Gemäß einer weiteren vorzugsweisen Ausgestaltungsform der Erfindung folgt das Verhältnis mindestens zweier Maximalabstände zwischen Dämpfungselementen einem Zufallsmuster und vorzugsweise einem Monte-Carlo-basierten Zufallsmuster. Durch den erfindungsgemäßen Umstand, dass das Verhältnis mindestens zweier Maximalabstände zwischen Dämpfungselementen einem Zufallsmuster und vorzugsweise einem Monte-Carlo-basierten Zufallsmuster folgt, wird der erfindungsgemäße Vorteil erreicht, Geräusche mit hohen akustischen Frequenzen, die bei höheren Raummoden auftreten können, akustisch ausreichend zu dämpfen. Darüber hinaus können auf diese Weise verschiedene Raummoden gleichzeitig gedämpft werden.

Ferner kann anhand einer Verteilung der Dämpfungselemente ein Reifenrundlauf verbessert werden. Hintergrund der Verbesserung des Reifenrundlaufs ist, dass die Dämpfungselemente an Stellen innerhalb der Reifeninnenfläche angeordnet werden können, an denen der Luftreifen lokale Massendefizite aufweisen kann. Die Massendefizite betreffen dabei die Masse des Luftreifens selbst. Zu diesem Zweck wird die Masse der Dämpfungselemente zum Ausgleich der Massendefizite des Luftreifens genutzt.

Gemäß einer weiteren vorzugsweisen Ausgestaltungsform der Erfindung ist eine Anzahl von N Dämpfungselementen in Gruppen angeordnet. Dabei besteht insbesondere zwischen einem Abstand X in cm der einzelnen Dämpfungselemente innerhalb einer Gruppe zu einem Abstand K in cm zwischen zwei unmittelbar benachbarten Gruppen von Dämpfungselementen das Verhältnis:

$$(N-1) \; x \; X : K = A{:}B$$

Dabei nehmen A und B insbesondere die Werte A = 3 und B = 17 an. Gemäß einer weiteren Möglichkeit handelt sich bei A und B jeweils um eine Primzahl.
Durch den Umstand, dass der Abstand X in cm der einzelnen Dämpfungselemente innerhalb einer Gruppe von Dämpfungselementen zu einem Abstand K in cm zwischen zwei unmittelbar benachbarten Gruppen dem oben genannten Verhältnis folgt, wird sichergestellt, dass eine Vielzahl von im Reifeninnenraum entstehenden Moden unterdrückt wird.

Beispielsweise kann darüber hinaus der Abstand X in cm in folgendes Verhältnis zur Maximalbreite mindestens eines Dämpfungselementes in cm gesetzt werden:
(Maximalbreite mindestens eines Dämpfungselementes):X = 1:3.

Dieses beispielhafte Muster gilt für eine Gruppe von je zwei Dämpfungselementen bei Raummode 5. Entsprechend dieses Beispiels hat das mindestens eine Dämpfungselement eine Maximallänge von 20 mm. Dadurch beträgt der Abstand X = 6 cm. Eine Gruppe von je zwei Dämpfungselementen weist mit dem Abstand X eine gesamte Länge von 10 cm entlang der Reifeninnenfläche in Umlaufrichtung auf. Im Fall A = 3 und B = 17 beträgt der Abstand K dann 34 cm. Dadurch ergeben sich entsprechend dieses Beispiels beispielhaft 5 Gruppen von zwei Dämpfungselementen bei einer Umfangslänge der Reifeninnenfläche von 2 m. Ferner können entsprechend einer weiteren Möglichkeit, insbesondere im Fall einer nicht äquidistanten Anordnung der Gruppen der Dämpfungselemente oder der Dämpfungselemente innerhalb der Gruppen, die Abstände X und K variiert werden.

Gemäß einer nächsten vorteilhaften Ausgestaltungsform der Erfindung ist der erste Maximalabstand 0% bis 500% größer als der zweite Maximalabstand.
Die Wirkung der Dämpfungselemente wird effizient gestaltet, wenn ein Maximalabstand der Dämpfungselemente voneinander einer Wellenlänge einer harmonischen Welle entspricht. Beispielsweise wird ein erster Maximalabstand in Abhängigkeit einer kleinsten zu dämpfenden Raummode gewählt und ein zweiter Maximalabstand wird anhand einer höchsten zu dämpfenden Raummode gewählt.

Gemäß einer nächsten vorzugsweisen Ausgestaltungsform der Erfindung sind die Maximalhöhe und/oder die Maximalbreite und/oder die Maximallänge und/oder eine Geometrie des mindestens einen Dämpfungselementes von der Maximalhöhe und/oder der Maximalbreite und/oder der Maximallänge und/oder einer Geometrie mindestens eines anderen Dämpfungselementes verschieden.

Durch den erfindungsgemäßen Umstand, dass die Maximalhöhe und/oder die Maximalbreite und/oder die Maximallänge und/oder eine Geometrie mindestens eines Dämpfungselementes von der Maximalhöhe und/oder der Maximalbreite und/oder der Maximallänge und/oder einer Geometrie mindestens eines anderen Dämpfungselementes verschieden ist, kann wiederum die Menge des porösen Materials an die akustischen Gegebenheiten im Inneren des Luftreifens angepasst werden. Somit kann die Maximalbreite eines ersten Dämpfungselementes von der Maximalbreite eines zweiten Dämpfungselementes verschieden sein. Beispielsweise kann die Maximalbreite eines ersten Dämpfungselementes 10% bis 2000% größer als die Maximalbreite eines zweiten Dämpfungselementes sein. Somit kann ferner die Maximallänge eines ersten Dämpfungselementes von der Maximallänge eines zweiten Dämpfungselementes verschieden sein. Beispielsweise kann die Maximallänge eines ersten Dämpfungselementes 10% bis 2000% größer als die Maximallänge eines zweiten Dämpfungselementes sein.

Hintergrund der Anpassung ist, dass für bestimmte, im Inneren des Luftreifens auftretende Raummoden nur eine bestimmte Anzahl von Dämpfungselementen mit einer vorgegebenen Maximalhöhe und/oder Maximalbreite und/oder Maximallänge und/oder Geometrie zur Dämpfung notwendig ist. Für andere, im Inneren des Luftreifens auftretende Moden reichen Dämpfungselemente mit geringerer Maximalhöhe zur Dämpfung aus.

Gemäß einer weiteren vorzugsweisen Ausgestaltungsform der Erfindung ist die erste Maximalhöhe des mindestens einen Dämpfungselementes 10% bis 2000% größer als die Maximalhöhe des mindestens einen anderen Dämpfungselementes.

Gemäß einer weiteren vorteilhaften Ausgestaltungsform der Erfindung ist das mindestens eine Dämpfungselement mittels eines Dichtmittels haftend an der Reifeninnenfläche angebracht. Dabei ist eine erste Schichtdicke des unmittelbar an der Seite des mindestens einen Dämpfungselements auf der Reifeninnenfläche aufgebrachten Dichtmittels von einer Schichtdicke des unmittelbar unterhalb des mindestens einen Dämpfungselementes aufgebrachten Dichtmittels verschieden oder zu dieser gleich. Dies bedeutet, dass in den Bereichen der Reifeninnenfläche, in denen Dämpfungselemente angeordnet sind, andere Schichtdicken des Dichtmittels gegeben sein können, als in solchen Bereichen der Reifeninnenfläche, in denen keine Dämpfungselemente angeordnet sind.

Durch den Umstand, wonach eine erste Schichtdicke des unmittelbar an der Seite des mindestens einen Dämpfungselementes auf der Reifeninnenfläche aufgebrachten Dichtmittels von der Schichtdicke des unmittelbar unterhalb des mindestens einen Dämpfungselementes aufgebrachten Dichtmittels verschieden ist, wird sichergestellt, dass an dem Bereich der Reifeninnenfläche, der unmittelbar an den Bereich der Reifeninnenfläche angrenzt, an dem das mindestens eine Dämpfungselement angeordnet ist, ein ausreichender Schutz, beispielsweise vor Reifendurchstichen oder anderen Beschädigungen, durch das als selbst abdichtendes Klebemittel wirkende Dichtmittel sichergestellt ist.

Gemäß einer weiteren vorzugsweisen Ausgestaltungsform der Erfindung weist die erste Schichtdicke die 0,5- bis 4-fache Stärke der Schichtdicke des unmittelbar unterhalb des mindestens einen Dämpfungselementes aufgebrachten Dichtmittels auf und/oder die erste Schichtdicke beträgt insbesondere 3mm bis 5mm und vorzugsweise 4mm und/oder die Schichtdicke des unmittelbar unterhalb des mindestens einen Dämpfungselementes aufgebrachten Dichtmittels beträgt insbesondere 1mm bis 8mm.

Durch den Umstand, dass die Schichtdicke des unmittelbar unterhalb des mindestens einen Dämpfungselements aufgebrachten Dichtmittels stärker als die Schichtdicke des unmittelbar neben dem Dämpfungselement angebrachten Dichtmittels ist, wird der erfindungsgemäße Vorteil erreicht, wonach unterhalb des Dämpfungselementes der Luftreifen besonders vor mechanischen Beschädigungen, beispielsweise Durchstichen, geschützt ist. In dem Fall, dass die Schichtdicke des unmittelbar unterhalb des mindestens einen Dämpfungselementes aufgebrachten Dichtmittels kleiner ist, als unmittelbar neben dem mindestens seinen Dämpfungselement, wird der erfindungsgemäße Vorteil erreicht, dass außerhalb des Dämpfungselements eine weitere Masse in Form des Dichtmittels angeordnet ist. Diese weitere Masse führt wiederum zu einer Verminderung von im Inneren des Luftreifens auftretenden Geräuschen, da die Masse selbst schallabsorbierend ist und eine Schwingungsamplitude der Schallwellen reduziert. Darüber hinaus wird die Masse des Dämpfungselementes kompensiert und ein verbesserter Rundlauf des Luftreifens erzeugt.

Gemäß einer weiteren vorzugsweisen Ausgestaltungsform der Erfindung handelt es sich bei dem Dichtmittel um ein Polyurethan-Gel.

Bei dem Dichtmittel handelt es sich insbesondere um ein Polyurethan-Gel in Kombination mit einem Klebeband und/oder mit einem silikonbasierten Kleber und/oder mit einem Zwei-Komponenten-Kleber und/oder mit einem Baukleber und/oder mit einem Polyurethan-Kleber und/oder mit einem kautschukbasierten Kleber und/oder mit einem Reifenreparaturkleber und/oder mit einem Sekundenkleber und/oder in Kombination mit einem Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon.

Insbesondere kann für mindestens ein Dämpfungselement ein anderes Dichtmittel verwendetet werden als für mindestens ein anderes Dämpfungselement. Die Wahl des Dichtmittels kann von der Geometrie und/oder der Masse des porösen Materials des jeweiligen Dämpfungselements abhängen. Dabei betrifft die Wahl des Dichtmittels insbesondere seine chemische Zusammensetzung.

Gemäß einer weiteren vorteilhaften Ausführungsform der Erfindung bedeckt das Dichtmittel eine Kontaktfläche zwischen dem mindestens einen Dämpfungselement und der Reifeninnenfläche vollständig oder teilweise. Bei der Kontaktfläche handelt es sich um die Oberfläche des mindestens einen Dämpfungselementes, die der Reifeninnenfläche zugewandt ist und zwischen der und der Reifeninnenfläche mittels des Dichtmittels eine Haftverbindung hergestellt wird.

Darüber hinaus kann die Schichtdicke des unmittelbar neben dem mindestens einen Dämpfungselement aufgebrachten Dichtmittels der Schichtdicke des Dichtmittels unterhalb des Dämpfungselementes entsprechen und erst in einem bestimmten Abstand zum Dämpfungselement entlang der Reifeninnenfläche eine andere Schichtdicke des Dichtmittels aufweisen.

Ferner kann eine Zusatzmenge des Dichtmittels unmittelbar unterhalb mindestens eines Dämpfungselements aufgebracht sein. Diese Zusatzmenge übersteigt die Menge an Dichtmittel die an sich notwendig wäre, um eine ausreichende Haftverbindung zwischen mindestens einem Dämpfungselement und der Reifeninnenfläche zu gewährleisten. Durch die Zusatzmenge wird die Haftverbindung zwischen mindestens einem Dämpfungselement und der Reifeninnenfläche zuverlässiger gestaltet.

Bei dem porösen Material, aus dem das mindestens eine Dämpfungselement ausgebildet ist, kann es sich beispielsweise um Standard ContiSilent®-Schaum handeln und/oder beispielsweise Polyurethan oder Polyester mit einer Dichte von 30 bis 35kg/m$^3$ und einer Härte von 6,5 kilo-pascal. Weitere mögliche poröse Materialien weisen eine Mischung aus Polyurethan und/oder Polyester und/oder Polyether, oder Polyurethanschäume auf einer Polyetherbasis oder einer Polyesterbasis mit einer Dichte von 30 - 35kg/m$^3$ und einer Härte von 6,5 kilo-pascal, eine beliebige poröse, schallabsorbierende Materialienmischung, beispielsweise Glas- oder Steinwolle, Schlingenware oder Hochflor oder Vliesmaterialien oder Kork auf. Weitere mögliche poröse Materialien, die sich für die Nutzung als Dämpfungselement eignen, sind beispielsweise ein Melaminharzschaum oder ein Bauschaum.

Ferner weist das poröse Material des Dämpfungselementes insbesondere eine Dichte von beispielsweise bis zu 100 kg/m$^3$ und/oder eine Stauchhärte von beispielswiese 1,5 kilo-pascal auf.

Vorzugsweise kann das poröse Material mindestens eines Dämpfungselements von dem porösen Material mindestens einen anderen Dämpfungselementes hinsichtlich der Zusammensetzung seiner Materialien verschieden sein. Insbesondere können Gruppen von Dämpfungselementen hinsichtlich der porösen Materialien und der mit den porösen Materialien verbundenen Eigenschaften sowie ihrer Zusammensetzung von anderen Gruppen von Dämpfungselementen verschieden sein.

Beispielsweise können einzelne Dämpfungselemente oder Gruppen von Dämpfungselementen somit auf Absorptionsmaxima, je nach auftretender Raummode, abgestimmt sein. Die Absorptionsmaxima beziehen sich auf die Absorption der mit den Raummoden verbundenen Schallwellen im Inneren des Luftreifens.

Ferner kann mindestens ein Dämpfungselement aus verschiedenen porösen Materialien ausgebildet sein.

Darüber hinaus kann das mindestens eine Dämpfungselement derart ausgestaltet sein, dass das mindestens eine Dämpfungselement unterschiedliche Längen-, Breiten und Höhenausdehnungen aufweist. Ferner kann das mindestens eine Dämpfungselement eine asymmetrische Oberfläche aufweisen.

Weitere Merkmale, Vorteile und Einzelheiten, auf die die Erfindung in ihrem Umfang aber nicht beschränkt ist, werden nun anhand der Zeichnungen näher beschrieben.

Es zeigt:

Fig. 1    eine schematische Darstellung eines Querschnitts durch einen erfindungsgemäßen Luftreifen mit mindestens einem Dämpfungselement in Radialschnittansicht;

Fig. 2    die schematische Darstellung eines Bereichs eines erfindungsgemäßen Luftreifens mit mindestens einem Dämpfungselement in Schrägsicht;

Fig. 3    eine schematische Darstellung eines Bereichs eines erfindungsgemäßen Luftreifens mit mindestens einem Dämpfungselement in Schrägsicht gemäß einer ersten Ausführungsform;

Fig. 4    eine schematische Darstellung eines Bereichs eines erfindungsgemäßen Luftreifens mit mindestens einem Dämpfungselements gemäß weiterer Ausführungsformen,

Fig. 5 eine schematische Darstellung eines Bereichs eines erfindungsgemäßen Luftreifens mit mindestens einem Dämpfungselement gemäß einer nächsten Ausführungsform;

Fig. 6 eine schematische Darstellung eines Querschnitts durch einen erfindungsgemäßen Luftreifen mit mindestens einem Dämpfungselement gemäß einer nächsten Ausführungsform in Radialschnittansicht;

Fig. 7 eine schematische Darstellung eines Bereichs eines erfindungsgemäßen Luftreifens mit mindestens einem Dämpfungselement in Schrägsicht gemäß einer weiteren Ausführungsform.

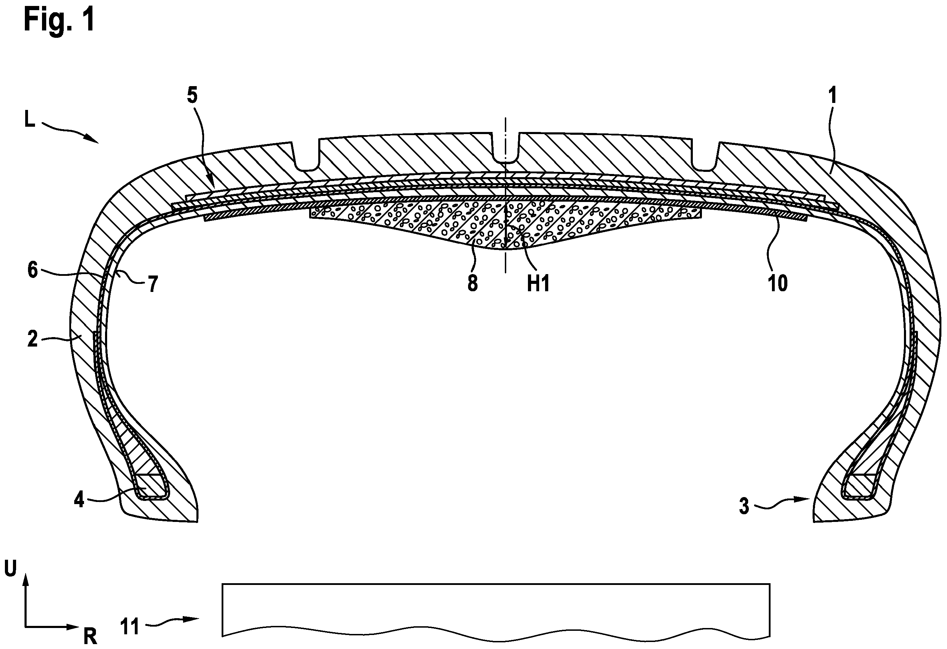

In der Figur 1 ist ein erfindungsgemäßer Luftreifen schematisch im Querschnitt in Radialschnittansicht dargestellt.

Der Luftreifen L weist einen Laufstreifen 1, Seitenwände 2, Wulstbereiche 3, Wulstkerne 4 sowie einen mehrlagigen Gürtelverband 5 und eine Karkasseneinlage 6 auf. Der Luftreifen L weist eine Reifeninnenfläche 7 auf. An der Reifeninnenfläche 7 ist mindestens ein Dämpfungselement 8 angeordnet. Das mindestens eine Dämpfungselement 8 ist aus einem porösen Material ausgebildet und zur Verminderung von Geräuschen geeignet.

Bei den Geräuschen handelt es sich um solche Geräusche, die im durch die Reifeninnenfläche 7 gebildeten Innenraum des Luftreifens L entstehen können. Eine Maximalhöhe des mindestens einen Dämpfungselementes 8 wird mit H1 bezeichnet. Mit 10 wird ein Dichtmittel bezeichnet. Das Dichtmittel 10 ist zum Schutz des Luftreifens L vor Durchstichen an der Reifeninnenfläche 7 angeordnet. Mittels des Dichtmittels 10 wird eine Haftverbindung zwischen der Reifeninnenfläche 7 und dem mindestens einen Dämpfungselement 8 erzeugt. Mit 11 wird eine Felge bezeichnet. Die Felge 11 ist kein Bestandteil des erfindungsgemäßen Luftreifens L. Der erfindungsgemäße Luftreifen L kann auf der Felge 11 montiert werden. Eine Rotationsachse R des Luftreifens L verläuft rechtwinklig zu der Ausdehnung der Maximalhöhe H1. Eine Umlaufrichtung U des Luftreifens L ist rechtwinklig zu der Rotationsachse R des Luftreifens L orientiert. Die Umlaufrichtung U steht insbesondere in Zusammenhang mit der kreisförmigen Rotationsbewegung des Luftreifens L um die Rotationsachse R.

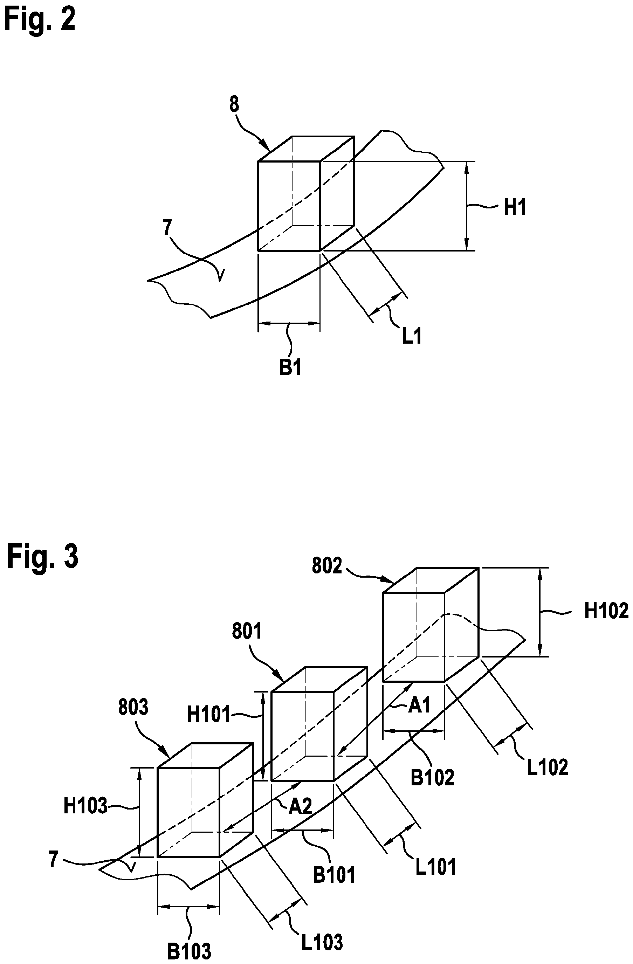

In der Figur 2 ist ein Bereich eines erfindungsgemäßen Luftreifens L mit dem mindestens einen Dämpfungselement 8 schematisch in Schrägsicht dargestellt. Mit L1 wird eine Maximallänge und mit H1 eine Maximalhöhe des mindestens einen Dämpfungselementes 8 bezeichnet. Dabei ist die Maximalhöhe H1 des mindestens einen Dämpfungselementes 8 größer als die Maximallänge L1 des mindestens einen Dämpfungselementes 8.

Insbesondere steht die Maximalhöhe H1 zur Maximallänge L1 in einem ersten Längenverhältnis von größer 1:1 bis 5:1 und vorzugsweise von 4:3 oder 5:3.

Mit B1 wird eine Maximalbreite des mindestens einen Dämpfungselementes 8 bezeichnet. Erfindungsgemäß ist die Maximalhöhe H1 größer oder gleich der Maximalbreite B1 und steht zu dieser insbesondere in einem zweiten Längenverhältnis von 1:1 bis 5:3 und vorzugsweise in einem zweiten Längenverhältnis von 4:3 oder 5:3. Durch die Längenverhältnisse der Maximalhöhe H1 zur Maximallänge L1 und der Maximalhöhe H1 zur Maximalbreite B1 werden Dämpfungselemente 8 bereitgestellt, die mit möglichst geringer Masse porösen Materials eine ausreichende Verminderung von Geräuschen im durch die Reifeninnenfläche 7 gebildeten Innenraum des Luftreifens L bewirken. Dabei ist eine als Verbindungsfläche wirkende Grundfläche des Dämpfungselementes 8 hinreichend groß, um eine mechanisch stabile Verbindung des mindestens einen Dämpfungselementes 8 mit der Reifeninnenfläche 7 auszubilden. Bei der Verbindungsfläche handelt es sich um die Fläche des Dämpfungselements 8, zwischen der und der Reifeninnenfläche 7 eine Haftverbindung erzeugt wird.

Das Dämpfungselement 8 weist gemäß der in der Figur 2 dargestellten Ausführungsform eine Oberfläche auf, wobei diese Oberfläche sich radial von der Reifeninnenfläche 7 weg weisend erstreckt und rechtwinklig zu der Umlaufrichtung U des Luftreifens 7 orientiert ist. Bei dem Dämpfungselement 8 kann diese Oberfläche in einem Winkel zur Umlaufrichtung U des Luftreifens stehen, wobei der Winkel vorzugsweise in einem Bereich vom 30° bis 45° liegt.

In der Figur 3 ist ein Bereich eines erfindungsgemäßen Luftreifens L mit mindestens einem Dämpfungselement 8 gemäß einer ersten Ausführungsform schematisch in Schrägsicht dargestellt. Gemäß der in der Figur 3 schematisch dargestellten Ausführungsform, sind mindestens drei Dämpfungselemente 801, 802 und 803 an der Reifeninnenfläche 7 angeordnet. Mit A1 und A2 werden Maximalabstände zwischen den Dämpfungselementen 801, 802 und 803 bezeichnet. Dabei handelt es sich bei dem ersten Maximalabstand A1 um einen Abstand zwischen einem ersten Dämpfungselement 801 zu dem ihm unmittelbar benachbarten zweiten Dämpfungselement 802 in Umlaufrichtung U des Luftreifens L entlang der Reifeninnenfläche 7. Bei dem zweiten Maximalabstand A2 handelt es sich um einen Abstand zwischen dem mindestens einen ersten Dämpfungselement 801 zu dem ihm unmittelbar benachbarten dritten Dämpfungselement 803 in Umlaufrichtung U des Luftreifens L entlang der Reifeninnenfläche 7.

Erfindungsgemäß können die Maximalabstände A1 und A2 zueinander gleich oder aber voneinander verschieden sein. Die Dämpfungselemente 801, 802 und 803 weisen Maximalhöhen H103, H102 beziehungsweise H103 auf. Die Maximalhöhen H103, H102 beziehungsweise H103 der Dämpfungselemente 801, 802 und 803 und/oder Maximallängen L103, L102 beziehungsweise L103 der Dämpfungselemente 801, 802 und 803 können zueinander gleich oder aber voneinander verschieden sein.

Die Dämpfungselemente 801, 802 und 803 weisen gemäß der in der Figur 3 dargestellten Ausführungsform je eine Oberfläche auf, wobei diese Oberfläche sich radial von der Reifeninnenfläche 7 weg weisend erstreckt und rechtwinklig zu der Umlaufrichtung U des Luftreifens 7 orientiert ist. Bei mindestens einem der Dämpfungselemente 801, 802 und 803 kann diese Oberfläche in einem Winkel zur Umlaufrichtung U des Luftreifens stehen, wobei der Winkel vorzugsweise in einem Bereich vom 30° bis 45° liegt.

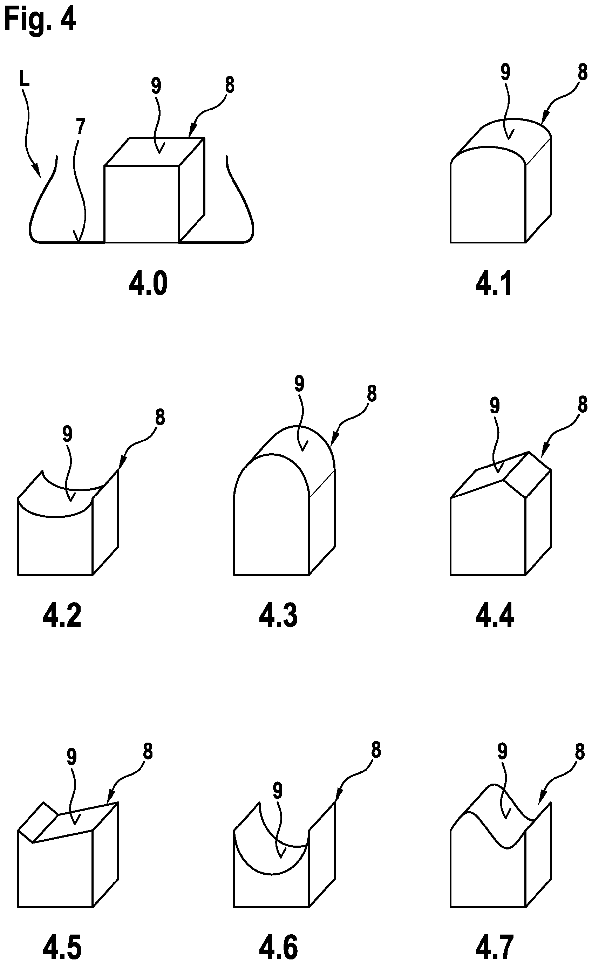

In der Figur 4 ist ein Bereich eines erfindungsgemäßen Luftreifens L mit mindestens einem Dämpfungselement 8 gemäß weiterer Ausführungsformen schematisch dargestellt. Gemäß der Ausführungsform in Teilfigur 4.0, ist eine Oberfläche 9 des Dämpfungselementes 8 als ebene Fläche ausgebildet. In den Teilfiguren 4.1 bis 4.7 sind weitere mögliche Oberflächenformen des Dämpfungselementes 8 dargestellt. So zeigt die Teilfigur 4.1 eine konvex-halbzylindrisch geformte Oberfläche 9 des Dämpfungselementes 8.

Teilfigur 4.2 zeigt eine konkav-halbzylindrisch geformte Oberfläche 9 des Dämpfungselementes 8.

Teilfigur 4.3 zeigt eine konvex-hyperbolisch geformte Oberfläche 9 des Dämpfungselementes 8.

Teilfigur 4.4 zeigt eine konvex-spitz geformte Oberfläche 9 des Dämpfungselementes 8. Teilfigur 4.5 zeigt eine konkav-spitz geformte Oberfläche 9 des Dämpfungselementes 8. Teilfigur 4.6 zeigt eine konkav-parabolisch geformte Oberfläche 9 des Dämpfungselementes 8.

Teilfigur 4.7 zeigt eine sinusförmige Oberfläche des Dämpfungselementes 8.

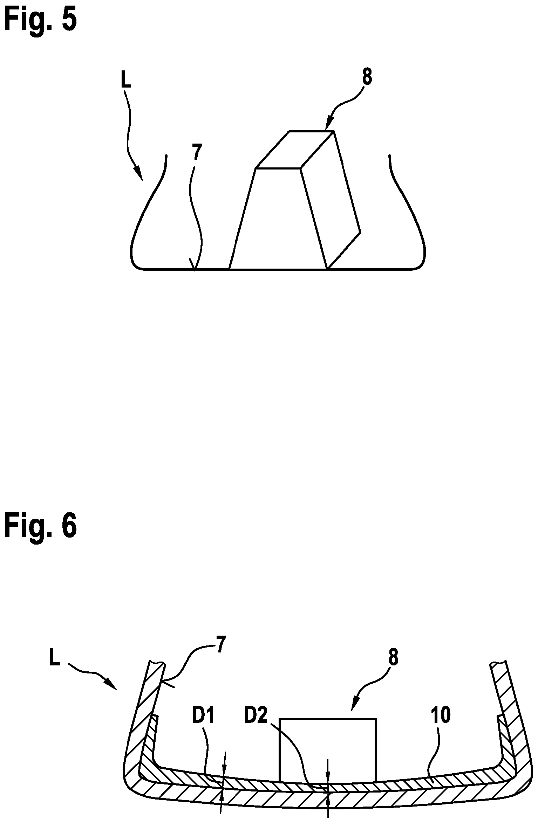

In der Figur 5 ist ein Bereich eines erfindungsgemäßen Luftreifens L mit mindestens einem Dämpfungselement gemäß einer weiteren Ausführungsform schematisch dargestellt. Gemäß der in der Figur 5 dargestellten schematischen Ausführungsform, verjüngt sich das mindestens eine Dämpfungselement 8 von der Reifeninnenfläche 7 ausgehend in Richtung einer in der Figur 5 nicht dargestellten Rotationsachse R hin. Das mindestens eine Dämpfungselement 8 hat dabei beispielsweise die Form einer Pyramide, eines Pyramidenstumpfs, vorzugsweise mit trapezförmigen Seitenflächen, eines Kegels oder eines Kegelstumpfes. Diese Ausführungsformen sind mit den in der Figur 4 dargestellten Oberflächenformen des Dämpfungselementes 8 kombinierbar.

In der Figur 6 ist ein erfindungsgemäßer Luftreifen L mit mindestens einem Dämpfungselement 8 gemäß einer nächsten Ausführungsform schematisch im Querschnitt in Radialschnittansicht dargestellt. Mit 10 wird ein Dichtmittel bezeichnet, wobei das Dichtmittel 10 haftend an der Reifeninnenfläche 7 angebracht ist. Das Dichtmittel 10 ist in der Lage, sich bei einem Durchstich oder einer anderen mechanischen Beschädigung des Luftreifens L selbst abdichtend zu verhalten. Das Dichtmittel 10 dient zudem dazu, eine Haftverbindung zwischen dem mindestens einem Dämpfungselement 8 und der Reifeninnenfläche 7 zu bewirken. Die Schichtdicke des Dichtmittels 10, das unmittelbar an der Seite des mindestens einen Dämpfungselementes 8 auf der Reifeninnenfläche 7 aufgebracht worden ist, wird mit D1 bezeichnet. Die Schichtdicke des unmittelbar unterhalb des mindestens einen Dämpfungselementes 8 auf der Reifeninnenfläche 7 aufgebrachten Dichtmittels 10 wird mit D2 bezeichnet. Die Schichtdicke D1 kann gleich der Schichtdicke D2 oder aber von dieser verschieden sein.

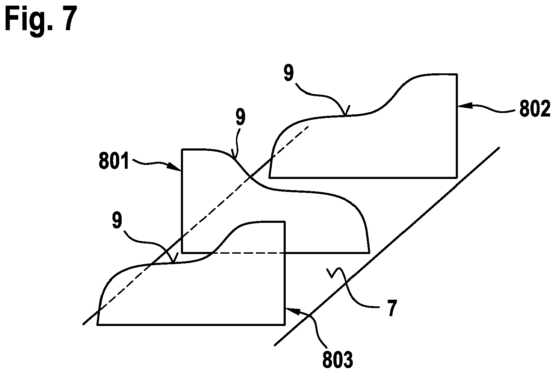

In der Figur 7 ist ein Bereich eines erfindungsgemäßen Luftreifens L mit mindestens einem Dämpfungselement gemäß einer weiteren Ausführungsform schematisch in Schrägsicht dargestellt. Gemäß der in der Figur 7 schematisch dargestellten Ausführungsform, sind mindestens drei Dämpfungselemente 801, 802 und 803 an der Reifeninnenfläche 7 angeordnet. Die mindestens drei Dämpfungselemente 801, 802 und 803 weisen jeweils voneinander verschiedene, insbesondere asymmetrische Oberflächen 9 auf.

## Bezugszeichenliste

(Teil der Beschreibung)

| | |
|---|---|
| 1 | Laufstreifen |
| 2 | Seitenwände |
| 3 | Wulstbereiche |
| 4 | Wulstkerne |
| 5 | mehrlagiger Gürtelverband |
| 6 | Karkasseneinlage |
| 7 | Reifeninnenfläche |
| 8 | Dämpfungselement |
| 801 | Dämpfungselement |
| 802 | Dämpfungselement |
| 803 | Dämpfungselement |
| 9 | Oberfläche des Dämpfungselements |
| 10 | Dichtmittel |
| 11 | Felge |
| H1 | Maximalhöhe |
| H101 | Maximalhöhe |
| H102 | Maximalhöhe |
| H103 | Maximalhöhe |
| L | Luftreifen |
| L1 | Maximallänge |
| L101 | Maximallänge |
| L102 | Maximallänge |
| L103 | Maximallänge |
| A1 | Maximalabstand |
| A2 | Maximalabstand |
| B1 | Maximalbreite |
| B101 | Maximalbreite |
| B102 | Maximalbreite |
| B103 | Maximalbreite |
| D1 | Schichtdicke |

D2    Schichtdicke
R     Rotationsachse
U     Umlaufrichtung

**Patentansprüche**

1. Luftreifen (L) mit mindestens einem Dämpfungselement (8), wobei das mindestens eine Dämpfungselement (8) in einem Inneren des Luftreifens (L), an einer einem Laufstreifen (1) des Luftreifens (L) gegenüberliegenden Reifeninnenfläche (7) angebracht ist, und wobei das mindestens eine Dämpfungselement (8) aus einem porösen Material ausgebildet und zur Verminderung von Geräuschen geeignet ist, wobei eine Maximalhöhe (H1) des mindestens einen Dämpfungselementes (8) größer als eine Maximallänge (L1) des mindestens einen Dämpfungselements (8) ist, wobei die Maximallänge (L1) einer sich entlang einer Umlaufrichtung (U) des Luftreifens (L) sich erstreckenden maximalen Ausdehnung des mindestens einen Dämpfungselementes (8) entspricht, wobei die Maximalhöhe (H1) zur Maximallänge (L1) in einem ersten Längenverhältnis von einem Wert größer 1:1 bis 5:1 und vorzugsweise von 4:3 oder 5:3 steht, wobei eine Maximalbreite (B1) des mindestens einen Dämpfungselementes (8) einer sich rechtwinklig zur Umlaufrichtung (U) sich entlang der Reifeninnenfläche (7) sich erstreckenden Ausdehnung des mindestens einen Dämpfungselementes (8) entspricht,
**dadurch gekennzeichnet, dass**
die Maximalbreite (B1) den Wert einer maximalen Breite der Reifeninnenfläche (7) beträgt.

2. Luftreifen (L) nach dem vorhergehenden Anspruch, **dadurch gekennzeichnet, dass** die Maximalhöhe (H1) 20mm bis 150mm und insbesondere 40mm beträgt.

3. Luftreifen (L) nach einem der vorhergehenden Ansprüche, **dadurch gekennzeichnet, dass** die Maximallänge (L1) 10mm bis 50mm, vorzugsweise 15mm bis 30mm und insbesondere 20mm bis 25mm beträgt.

4. Luftreifen (L) nach einem der vorhergehenden Ansprüche, **dadurch gekennzeichnet, dass** die Maximalhöhe (H1) größer oder gleich einer Maximalbreite (B1) des mindestens einen Dämpfungselementes (8) ist und insbesondere in einem zweiten Längenverhältnis von 1:1 bis 5:1 und vorzugsweise von 4:3 oder 5:3 steht.

5. Luftreifen (L) nach einem der vorhergehenden Ansprüche, **dadurch gekennzeichnet, dass** mindestens ein Dämpfungselement (8) sich von der Reifeninnenfläche (7) ausgehend in Richtung einer Rotationsachse (R) des Luftreifens (L) hin verjüngt und insbesondere die Form einer Pyramide, eines Pyramidenstumpfs, vorzugsweise mit trapezförmigen Seitenflächen, eines Kegels oder eines Kegelstumpfes aufweist.

6. Luftreifen (L) nach einem der vorhergehenden Ansprüche, **dadurch gekennzeichnet, dass** eine zu einer Felge (11) weisende Oberfläche (9), mindestens eines Dämpfungselements (8) konvex oder konkav geformt ist und die konvex oder konkav geformte Oberfläche (9) insbesondere halbzylindrisch, vorzugsweise elliptisch-halbzylindrisch, parabolisch-halbzylindrisch oder hyperbolisch-halbzylindrisch, oder sinusförmig oder sinusquadratförmig oder wellenförmig oder halbkreisförmig oder halbkreisförmig oder halbkreisförmig-dreieckig oder spitz oder korrespondierend zu einer Kontur der Felge (11) geformt ist.

7. Luftreifen (L) nach einem der vorhergehenden Ansprüche, **dadurch gekennzeichnet, dass** eine Anzahl von Dämpfungselementen (8) 1 bis 100 und insbesondere 2, 3, 4 oder einen doppelten Wert einer Nummer einer Raummode beträgt.

8. Luftreifen (L) nach einem der vorhergehenden Ansprüche, **dadurch gekennzeichnet, dass** ein erster Maximalabstand (A1) zwischen mindestens einem ersten Dämpfungselement (801) zu einem ihm unmittelbar benachbarten zweiten Dämpfungselement (802) in Umlaufrichtung (U) des Luftreifens (L) entlang der Reifeninnenfläche (7) von einem zweiten Maximalabstand (A2) verschieden ist, wobei es sich bei dem zweiten Maximalabstand (A2) um einen Abstand in Umlaufrichtung (U) des Luftreifens (L) entlang der Reifeninnenfläche (7) zwischen dem mindestens einem ersten Dämpfungselement (801) zu einem ihm unmittelbar benachbarten dritten Dämpfungselement (803) handelt.

9. Luftreifen (L) nach dem vorhergehenden Anspruch, **dadurch gekennzeichnet, dass** das Verhältnis mindestens zweier Maximalabstände (A1, A2) zwischen den Dämpfungselementen (801, 802, 803) einem Zufallsmuster und vorzugsweise einem Monte-Carlo-basierten Zufallsmuster folgt.

10. Luftreifen (L) nach einem der vorhergehenden Ansprüche, **dadurch gekennzeichnet, dass** die Maximalhöhe (H101) und/oder die Maximallänge (L101) und/oder eine Geometrie des mindestens einen Dämpfungselementes (801) von der Maximalhöhe (H102, H103) und/oder der Maximallänge (L102, L103) und/oder einer Geometrie mindestens eines anderen Dämpfungselementes (802, 803) verschieden sind.

**11.** Luftreifen (L) nach einem der vorhergehenden Ansprüche, **dadurch gekennzeichnet, dass** mindestens ein Dämpfungselement (8) mittels eines Dichtmittels (10) haftend an der Reifeninnenfläche (7) angebracht ist, wobei eine erste Schichtdicke (D1) des unmittelbar an der Seite des mindestens einen Dämpfungselementes (8) auf der Reifeninnenfläche (7) aufgebrachten Dichtmittels von einer Schichtdicke (D2) des unmittelbar unterhalb des mindestens einen Dämpfungselementes (8) aufgebrachten Dichtmittels (10) verschieden oder zu dieser gleich ist.

**12.** Luftreifen (L) nach dem vorhergehenden Anspruch, **dadurch gekennzeichnet, dass** die erste Schichtdicke (D1) die 0,5- bis 4-fache Stärke der Schichtdicke (D2) des unmittelbar unterhalb des mindestens einen Dämpfungselements (8) aufgebrachten Dichtmittels (10) aufweist und/oder die erste Schichtdicke (D1) insbesondere 3mm bis 5mm und vorzugsweise 4mm beträgt und/oder die Schichtdicke (D2) des unmittelbar unterhalb des mindestens einen Dämpfungselementes (8) aufgebrachten Dichtmittels (10) insbesondere 1mm bis 8mm beträgt.

**13.** Luftreifen (L) nach einem der Ansprüche 11 oder 12, **dadurch gekennzeichnet, dass** es sich bei dem Dichtmittel (10) um ein Polyurethan-Gel und insbesondere um ein Polyurethan-Gel in Kombination mit einem Klebeband und/oder mit einem silikonbasierten Kleber und/oder mit einem Zweikomponentenkleber und/oder mit einem Baukleber und/oder mit einem kautschukbasierten Kleber und/oder mit einem Reifenreparaturkleber und/oder mit einem Sekundenkleber und/oder in Kombination mit einem Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon handelt.

**Claims**

**1.** Pneumatic tyre (L) with at least one damping element (8), wherein the at least one damping element (8) is attached in an interior of the pneumatic tyre (L), on an inner tyre surface (7) opposite from a tread (1) of the pneumatic tyre (L), and wherein the at least one damping element (8) is formed from a porous material and is suitable for reducing noises, wherein a maximum height (H1) of the at least one damping element (8) is greater than a maximum length (L1) of the at least one damping element (8), wherein the maximum length (L1) corresponds to a maximum extent of the at least one damping element (8) extending along a circumferential direction (U) of the pneumatic tyre (L), wherein the maximum height (H1) in relation to the maximum length (L1) is in a first length ratio of a value greater than 1:1 to 5:1 and preferably of 4:3 or 5:3, wherein a maximum width (B1) of the at least one damping element (8) corresponds to an extent of the at least one damping element (8) extending at right angles to the circumferential direction (U) along the inner tyre surface (7), **characterized in that** the maximum width (B1) is the value of a maximum width of the inner tyre surface (7).

**2.** Pneumatic tyre (L) according to the preceding claim, **characterized in that** the maximum height (H1) is 20 mm to 150 mm and in particular 40 mm.

**3.** Pneumatic tyre (L) according to one of the preceding claims, **characterized in that** the maximum length (L1) is 10 mm to 50 mm, preferably 15 mm to 30 mm and in particular 20 mm to 25 mm.

**4.** Pneumatic tyre (L) according to one of the preceding claims, **characterized in that** the maximum height (H1) is greater than or equal to a maximum width (B1) of the at least one damping element (8) and is in particular in a second length ratio of 1:1 to 5:1 and preferably of 4:3 or 5:3.

**5.** Pneumatic tyre (L) according to one of the preceding claims, **characterized in that** at least one damping element (8) tapers from the inner tyre surface (7) in the direction of an axis of rotation (R) of the pneumatic tyre (L), and has in particular the form of a pyramid, a frustum of a pyramid, preferably with trapezoidal side faces, a cone or a frustum of a cone.

**6.** Pneumatic tyre (L) according to one of the preceding claims, **characterized in that** a surface (9), facing a rim (11), of at least one damping element (8) is convexly or concavely formed and the convexly or concavely formed surface (9) is formed in particular in a half-cylindrical, preferably elliptical half-cylindrical, parabolic half-cylindrical or hyperbolic half-cylindrical manner, or in a sine-shaped or sine-squared-shaped or wave-shaped manner or in a semicircular or semicircular or semicircular-triangular manner or in a pointed manner or in a manner corresponding to a contour of the rim (11).

**7.** Pneumatic tyre (L) according to one of the preceding claims, **characterized in that** a number of damping elements (8) is 1 to 100, and in particular 2, 3, 4 or a double value of a number of a room mode.

**8.** Pneumatic tyre (L) according to one of the preceding claims, **characterized in that** a first maximum distance (A1) between at least one first damping element (801) and a second damping element (802) directly adjacent to it in the circumferential direction (U) of the pneumatic tyre (L) along the inner tyre surface (7) is different from a second maximum distance (A2), wherein the second maximum distance (A2) is a distance in the circumferential direction (U) of the pneumatic tyre (L) along the inner tyre surface (7) between the at least one first damping element (801) and a third damping element (803) directly adjacent to it.

9. Pneumatic tyre (L) according to the preceding claim, **characterized in that** the ratio of at least two maximum distances (A1, A2) between the damping elements (801, 802, 803) follows a random pattern and preferably a Monte Carlo-based random pattern.

10. Pneumatic tyre (L) according to one of the preceding claims, **characterized in that** the maximum height (H101) and/or the maximum length (L101) and/or a geometry of the at least one damping element (801) are different from the maximum height (H102, H103) and/or the maximum length (L102, L103) and/or a geometry of at least one other damping element (802, 803) .

11. Pneumatic tyre (L) according to one of the preceding claims, **characterized in that** at least one damping element (8) is adhesively attached to the inner tyre surface (7) by means of a sealant (10), wherein a first layer thickness (D1) of the sealant applied on the inner tyre surface (7) directly on the side of the at least one damping element (8) is different from or equal to a layer thickness (D2) of the sealant (10) applied directly underneath the at least one damping element (8).

12. Pneumatic tyre (L) according to the preceding claim, **characterized in that** the first layer thickness (D1) is 0.5 to 4 times the amount of the layer thickness (D2) of the sealant (10) applied directly underneath the at least one damping element (8) and/or the first layer thickness (D1) is in particular 3 mm to 5 mm and preferably 4 mm and the layer thickness (D2) of the sealant (10) applied directly underneath the at least one damping element (8) is in particular 1 mm to 8 mm.

13. Pneumatic tyre (L) according to either of Claims 11 and 12, **characterized in that** the sealant (10) is a polyurethane gel and in particular a polyurethane gel in combination with an adhesive tape and/or with a silicon-based adhesive and/or with a two-component adhesive and/or with a structural adhesive and/or with a rubber-based adhesive and/or with a tyre repair adhesive and/or with an instant adhesive and/or in combination with an adhesive based on cyanoacrylate and/or based on a water-based acrylic system with a polyethylene terephthalate structure and/or based on acrylonitrile butadiene rubber in combination with a formaldehyde resin dissolved in acetone and/or on the basis of a silane polyether and on the basis of a polybutene crosslinked with butyl rubber and/or on the basis of an alkoxy silicone.

## Revendications

1. Pneu (L) comprenant au moins un élément d'amortissement (8), ledit au moins un élément d'amortissement (8) étant disposé dans un espace intérieur du pneu (L), sur une surface intérieure de pneu (7) opposée à une bande de roulement (1) du pneu (L), et ledit au moins un élément d'amortissement (8) étant formé à partir d'un matériau poreux et étant approprié pour la réduction de bruits, une hauteur maximale (H1) dudit au moins un élément d'amortissement (8) étant supérieure à une longueur maximale (L1) dudit au moins un élément d'amortissement (8), la longueur maximale (L1) correspondant à une étendue maximale dudit au moins un élément d'amortissement (8) s'étendant le long d'une direction périphérique (U) du pneu (L), la hauteur maximale (H1) et la longueur maximale (L1) présentant un premier rapport de longueurs d'une valeur de plus de 1:1 à 5:1 et de préférence de 4:3 ou 5:3, une largeur maximale (B1) dudit au moins un élément d'amortissement (8) correspondant à une étendue dudit au moins un élément d'amortissement (8) s'étendant à un angle droit par rapport à la direction périphérique (U) le long de la surface intérieure de pneu (7),
**caractérisé en ce que**
la largeur maximale (B1) est la valeur d'une largeur maximale de la surface intérieure de pneu (7).

2. Pneu (L) selon la revendication précédente, **caractérisé en ce que** la hauteur maximale (H1) est de 20 mm à 150 mm et notamment de 40 mm.

3. Pneu (L) selon l'une quelconque des revendications précédentes, **caractérisé en ce que** la longueur maximale (L1) est de 10 mm à 50 mm, de préférence de 15 mm à 30 mm et notamment de 20 mm à 25 mm.

4. Pneu (L) selon l'une quelconque des revendications précédentes, **caractérisé en ce que** la hauteur maximale (H1) est supérieure ou égale à une largeur maximale (B1) dudit au moins un élément d'amortissement (8) et présente notamment un deuxième rapport de longueurs de 1:1 à 5:1 et de préférence de 4:3 ou 5:3.

5. Pneu (L) selon l'une quelconque des revendications précédentes, **caractérisé en ce qu'**au moins un élément d'amortissement (8) s'amincit à partir de la surface intérieure de pneu (7) en direction d'un axe de rotation (R) du pneu (L) et présente notamment la forme d'une pyramide, d'un tronc de pyramide, de préférence avec des surfaces latérales trapézoïdales, d'un cône ou d'un tronc de cône.

6. Pneu (L) selon l'une quelconque des revendications précédentes, **caractérisé en ce qu'**une surface (9) orientée vers une jante (11), d'au moins un élément d'amortissement (8), est de forme convexe ou concave, et la surface (9) de forme convexe ou concave est notamment de forme semi-cylindrique, de préférence elliptique-semi-cylindrique, parabolique-semi-cylindrique ou hyperbolique-semi-cylindrique, ou de forme sinusoïdale ou de forme sinusoïdale carrée ou de forme ondulée ou de forme semi-circulaire ou de forme semi-circulaire ou de forme semi-circulaire-triangulaire ou pointue ou correspondant à un contour de la jante (11).

7. Pneu (L) selon l'une quelconque des revendications précédentes, **caractérisé en ce qu'**un nombre d'éléments d'amortissement (8) est de 1 à 100 et notamment de 2, 3, 4 ou une valeur double d'un numéro d'un mode propre.

8. Pneu (L) selon l'une quelconque des revendications précédentes, **caractérisé en ce qu'**un premier écart maximal (A1) entre au moins un premier élément d'amortissement (801) et un deuxième élément d'amortissement (802) immédiatement voisin de celui-ci dans la direction périphérique (U) du pneu (L) le long de la surface intérieure de pneu (7) est différent d'un deuxième écart maximal (A2), le deuxième écart maximal (A2) consistant en un écart dans la direction périphérique (U) du pneu (L) le long de la surface intérieure de pneu (7) entre ledit au moins un premier élément d'amortissement (801) et un troisième élément d'amortissement (803) immédiatement voisin de celui-ci.

9. Pneu (L) selon la revendication précédente, caractérisé en ce le rapport entre au moins deux écarts maximaux (A1, A2) entre les éléments d'amortissement (801, 802, 803) suit un modèle aléatoire et suit de préférence un modèle aléatoire de type Monte-Carlo.

10. Pneu (L) selon l'une quelconque des revendications précédentes, **caractérisé en ce que** la hauteur maximale (H101) et/ou la longueur maximale (L101) et/ou une géométrie dudit au moins un élément d'amortissement (801) sont différentes de la hauteur maximale (H102, H103) et/ou de la longueur maximale (L102, L103) et/ou d'une géométrie d'au moins un autre élément d'amortissement (802, 803).

11. Pneu (L) selon l'une quelconque des revendications précédentes, **caractérisé en ce qu'**au moins un élément d'amortissement (8) est disposé de manière adhésive sur la surface intérieure de pneu (7) au moyen d'un agent d'étanchéité (10), une première épaisseur de couche (D1) de l'agent d'étanchéité appliqué immédiatement à côté dudit au moins un élément d'amortissement (8) sur la surface intérieure de pneu (7) étant différente d'une épaisseur de couche (D2) de l'agent d'étanchéité (10) appliqué immédiatement en dessous dudit au moins un élément d'amortissement (8) ou étant identique à celle-ci.

12. Pneu (L) selon la revendication précédente, **caractérisé en ce que** la première épaisseur de couche (D1) est de 0,5 à 4 fois l'épaisseur de couche (D2) de l'agent d'étanchéité (10) appliqué immédiatement en dessous dudit au moins un élément d'amortissement (8) et/ou la première épaisseur de couche (D1) est notamment de 3 mm à 5 mm et de préférence de 4 mm et/ou l'épaisseur de couche (D2) de l'agent d'étanchéité (10) appliqué immédiatement en dessous dudit au moins un élément d'amortissement (8) est notamment de 1 mm à 8 mm.

13. Pneu (L) selon l'une quelconque des revendications 11 ou 12, **caractérisé en ce que** l'agent d'étanchéité (10) consiste en un gel de polyuréthane et notamment en un gel de polyuréthane en combinaison avec une bande adhésive et/ou avec un adhésif à base de silicone et/ou avec un adhésif bicomposant et/ou avec un adhésif de construction et/ou avec un adhésif à base de caoutchouc et/ou avec un adhésif de réparation de pneu et/ou avec un adhésif instantané et/ou en combinaison avec un adhésif à base de cyanoacrylate et/ou à base d'un système acrylique à base d'eau ayant une structure polyéthylène téréphtalate et/ou à base de caoutchouc d'acrylonitrile-butadiène conjointement avec une résine de formaldéhyde dissoute dans de l'acétone et/ou à base d'un silane-polyéther et/ou à base d'un polybutène réticulé avec du caoutchouc de butyle et/ou à base d'une alcoxy-silicone.

Fig. 1

# Fig. 2

# Fig. 3

# Fig. 4

**4.0**

**4.1**

**4.2**

**4.3**

**4.4**

**4.5**

**4.6**

**4.7**

**Fig. 5**

**Fig. 6**

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2014169060 A
- DE 112006000354 T5
- EP 2566712 B1
- EP 1510366 A1